# EUROPEAN PATENT APPLICATION

(11) **EP 4 435 950 A1**
(43) Date of publication of application: **25.09.2024**
(21) Application number: 23769772.7
(22) Date of filing: 14.03.2023
(51) Int. Cl.: H01M 50/22, H01M 50/233, H01M 50/244, H01M 50/249

(54) **EDGE BEAM FOR BATTERY TRAY, BATTERY TRAY, BATTERY PACK AND VEHICLE**

(30) Priority: 14.03.2022 CN 202220554010 U
(71) Applicant: BYD Company Limited, Shenzhen, Guangdong 518118 (CN)
(72) Inventor: WANG, Qi, Shenzhen, Guangdong 518118 (CN); TANG, Jianglong, Shenzhen, Guangdong 518118 (CN); LU, Zhipei, Shenzhen, Guangdong 518118 (CN); YI, Ning, Shenzhen, Guangdong 518118 (CN); LI, Jianqiang, Shenzhen, Guangdong 518118 (CN)
(74) Representative: Arnold & Siedsma
(86) International application number: PCT/CN2023/081345
(87) International publication number: WO 2023/174270

(57) **Abstract**

A side beam (10) for a battery tray (100), a battery tray (100), a battery pack (200) and a vehicle are provided. The side beam (10) for the battery tray (100) includes: a first body (11), the first body (11) including a main portion (111) and a supporting portion (112), and the supporting portion (112) being connected to the main portion (111) and configured to support a battery core (201); and a second body (12), the second body (12) and the first body (11) being split workpieces, the second body (12) being fixed to the first body (11), and at least part of a structure of the second body (12) being located at a side of the supporting portion (112).

## Description

### CROSS-REFERENCE TO RELATED APPLICATIONS

The present disclosure claims priority to Chinese Patent Application No. "202220554010X" filed by "BYD Company Limited" on March 14, 2022 and entitled "SIDE BEAM FOR BATTERY TRAY, BATTERY TRAY, BATTERY PACK AND VEHICLE".

### FIELD

The present disclosure relates to the field of batteries, and specifically to a side beam for a battery tray, a battery tray, a battery pack and a vehicle.

### BACKGROUND

In related art, a battery pack is provided with a battery tray. An existing side beam for the battery tray is an integrally formed component. A thickness and material of the side beam can be adjusted as a whole only, and a thickness and material at a certain position of the side beam cannot be adjusted alone. As a result, the side beam cannot meet strength and weight requirements at different positions and has poor versatility. Moreover, in an existing battery tray, a tray bottom plate of the battery tray bears the weight of a battery core, resulting in a large thickness of the tray bottom plate. This is not conducive to a lightweight design and cost reduction of the battery pack.

### SUMMARY

The present disclosure aims to solve at least one of the technical problems in related art. To this end, an objective of the present disclosure is to provide a side beam for a battery tray. The side beam for a battery tray bears most of the weight of a battery core, to reduce a strength requirement for a tray bottom plate and facilitate a lightweight design and cost reduction of a battery pack. Moreover, a second body and a first body can be produced separately, and a thickness and material of the first body and the second body can be flexibly adjusted according to actual needs, so that the side beam meets the design requirements for the strength and weight at different positions and has high versatility.

The present disclosure further provides a battery tray.

The present disclosure further provides a battery pack.

The present disclosure further provides a vehicle.

In accordance with the side beam for a battery tray according to the present disclosure, the battery tray has an accommodating groove for accommodating a battery core. The side beam includes: a first body, where the first body includes a main portion and a supporting portion, the supporting portion is connected to the main portion and provided at an end of the main portion close to the accommodating groove, and the supporting portion is configured to support the battery core; and a second body, where the second body and the first body are split workpieces, the second body is fixed to the first body, and at least part of the structure of the second body is located at a side of the supporting portion away from the accommodating groove.

In accordance with the side beam for a battery tray according to the present disclosure, by providing the supporting portion, the side beam bears most of the weight of the battery core, and the tray bottom plate of the battery tray bears a small fraction of the weight of the battery core, which reduce the strength requirement for the tray bottom plate and the thickness of the tray bottom plate, and facilitate the lightweight design and the cost reduction of a battery pack. Furthermore, by configuring the second body and the first body as split workpieces, the second body and the first body can be produced separately, and the thickness and material of the first body and the second body can be flexibly adjusted according to actual needs, so that the side beam meets the design requirements of the strength and weight at different positions and has high versatility.

In some embodiments of the present disclosure, in a width direction of the side beam, a length dimension of the supporting portion for supporting the battery core is A, and A meets the relation formula: 30 mm≤A≤100 mm.

In some embodiments of the present disclosure, the main portion includes: a top plate, a bottom plate, a first side plate and a second side plate. The top plate and the bottom plate are arranged at intervals in a height direction of the side beam. The first side plate and the second side plate are arranged at intervals in the width direction of the side beam. The first side plate is connected between the top plate and the bottom plate, the second side plate is connected between the supporting portion and the top plate, and a structure strengthening plate is connected between the top plate and the bottom plate.

In some embodiments of the present disclosure, the structure strengthening plate is obliquely connected between the top plate and the bottom plate.

In some embodiments of the present disclosure, in a direction from an upper end to a lower end of the side beam, the structure strengthening plate is arranged to tilt away from the accommodating groove.

In some embodiments of the present disclosure, the angle between the structure strengthening plate and the bottom plate is β, and β meets the relation formula: 110°≤β≤140°.

In some embodiments of the present disclosure, in the direction from an upper end to a lower end of the side beam, the second side plate is arranged to tilt toward the accommodating groove.

In some embodiments of the present disclosure, the angle between the second side plate and the structure strengthening plate is α, and α meets the relation formula: 50°≤α≤70°.

In some embodiments of the present disclosure, in the height direction of the side beam, a height difference between a lower surface of the bottom plate and a lower surface of the supporting portion is H, and H meets the relation formula: 5 mm≤H≤10 mm.

In some embodiments of the present disclosure, at least part of the structure of the second body is located below the supporting portion, the structure of the second body located below the supporting portion is provided with a boss protruding toward the first body, and the boss is fixedly connected to the supporting portion.

In some embodiments of the present disclosure, the second body is configured as a flat plate structure, the second body is fixedly connected to the supporting portion, and the supporting portion is provided with a boss for supporting the battery core.

In some embodiments of the present disclosure, the main portion and the supporting portion are configured as an integrally formed component.

The battery tray according to the present disclosure includes a side beam, where the side beam is the side beam for a battery tray as described above; a tray bottom plate, where the tray bottom plate has a pressurized area configured to support a battery core. The supporting portion is located below and supports the tray bottom plate, and an orthographic projection of the supporting portion and an orthographic projection of the pressurized area in a height direction of the battery tray have an overlapping area.

The battery pack according to the present disclosure includes: a battery core; a battery tray, where the battery tray is a battery tray as described above; and a cover, where the cover and the battery tray jointly define an accommodating cavity configured to accommodate the battery core, and the cover is connected to the battery tray.

The vehicle according to the present disclosure a battery pack as described above.

Additional aspects and advantages of the present disclosure will be partly given in the following description, some of which will become apparent from the following description, or may be learned from practices of the present disclosure.

### BRIEF DESCRIPTION OF THE DRAWINGS

FIG. 1 is a schematic view showing a side beam according to a first embodiment of the present disclosure.
FIG. 2 is a cross-sectional view of the side beam according to the first embodiment of the present disclosure.
FIG. 3 is a schematic view showing a first body of the side beam according to the first embodiment of the present disclosure.
FIG. 4 is a schematic view showing a second body of the side beam according to the first embodiment of the present disclosure.
FIG. 5 is a schematic view showing a lifting lug structure of the side beam according to the first embodiment of the present disclosure.
FIG. 6 is a schematic view showing a side beam according to a second embodiment of the present disclosure.
FIG. 7 is a cross-sectional view of the side beam according to the second embodiment of the present disclosure.
FIG. 8 is a schematic view showing a battery pack according to an embodiment of the present disclosure.
FIG. 9 is a schematic view showing a battery tray of a battery pack according to an embodiment of the present disclosure.
FIG. 10 is a cross-sectional view of the side beam according to the first embodiment of the present disclosure and a battery core after assembly.
FIG. 11 is a partially enlarged view of part A in FIG. 10.
FIG. 12 is a schematic view showing a second body of a side beam that is a flat plate structure according to an embodiment of the present disclosure.
FIG. 13 is a schematic view showing a vehicle according to an embodiment of the present disclosure.

### DETAILED DESCRIPTION

Embodiments of the present disclosure are described in detail below, and examples of the embodiments are shown in accompanying drawings, where the same or similar elements or the elements having the same or similar functions are denoted by the same or similar reference numerals throughout the description. The embodiments described below with reference to the accompanying drawings are exemplary and are only used to interpret the present disclosure, instead of limiting the present disclosure.

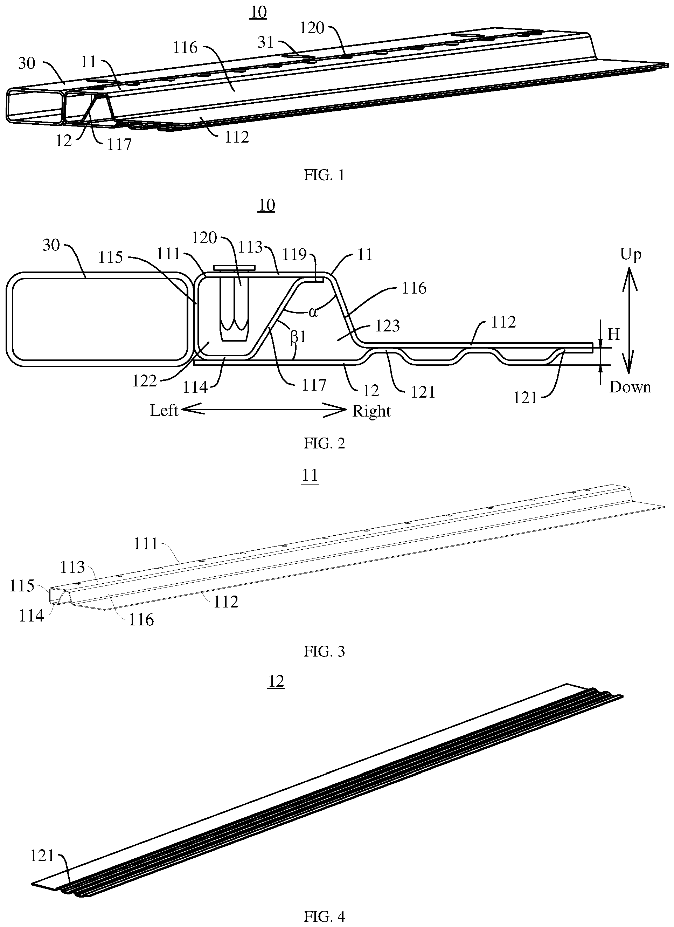

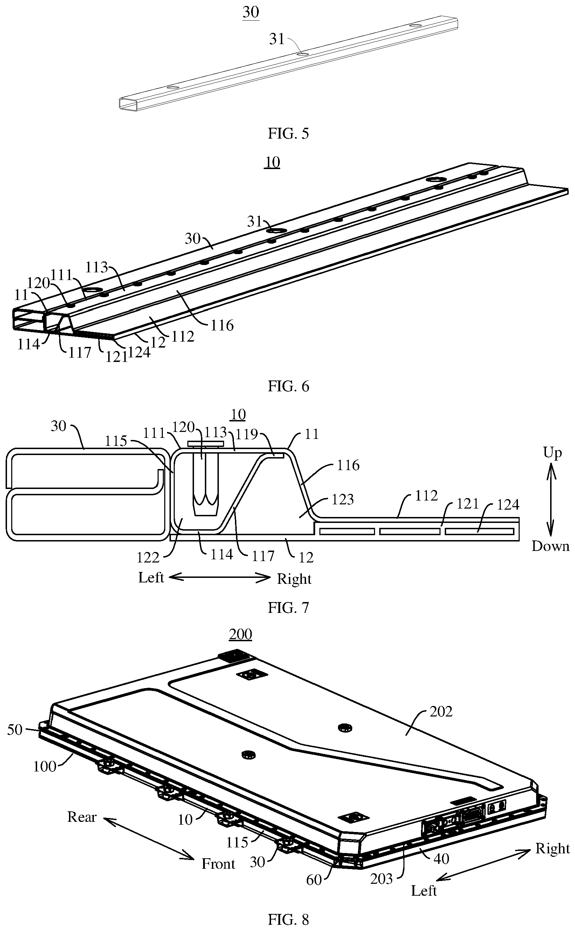

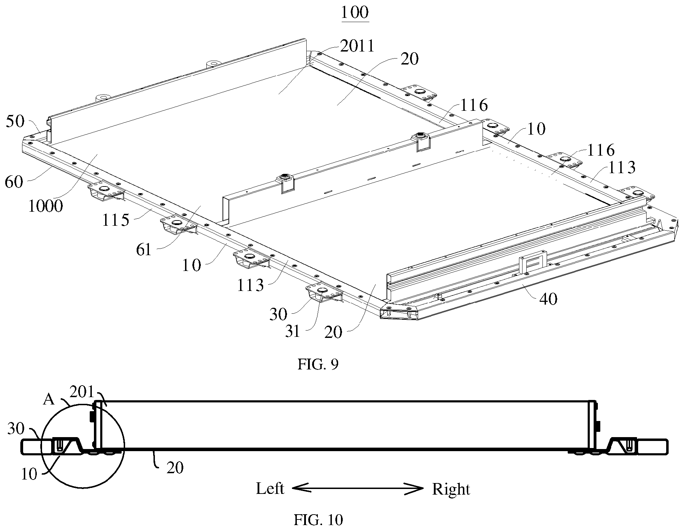

A side beam 10 for a battery tray 100 according to an embodiment of the present disclosure will be described below with reference to FIGs. 1 to 13. The battery tray 100 has an accommodating groove 1000 for accommodating a battery core 201. The battery tray 100 includes a side frame 60, and the side frame 60 defines a mounting space 61. For example, the side frame 60 may include a front beam 40, a rear beam 50 and two side beams 10. The two side beams 10, the front beam 40 and the rear beam 50 jointly define the mounting space 61. When a battery pack 200 is arranged in a pattern as shown in FIG. 8, the two side beams 10 are arranged at intervals in a left-right direction in FIG. 8, and the front beam 40 and the rear beam 50 are connected between the two side beams 10. The front beam 40 and the rear beam 50 are arranged at intervals in a front-rear direction of the battery pack 200. In this way, the front beam 40, the rear beam 50 and the two side beams 10 jointly define the mounting space 61. It is clear that, in other embodiments, two or more side beams 10 may be provided.

As shown in FIGs. 1 to 11, the side beam 10 according to the embodiment of the present disclosure includes a first body 11 and a second body 12. The first body 11 includes a main portion 111 and a supporting portion 112. The supporting portion 112 is connected to the main portion 111, the supporting portion 112 is provided at an end of the main portion 111 close to the accommodating groove 1000, and the supporting portion 112 is configured to support the battery core 201. Further, in a width direction of the side beam 10, the main portion 111 is connected with the supporting portion 112 at a side close to the mounting space 61, and the supporting portion 112 extends toward the interior of the mounting space 61. When the side beam 10 is arranged in a pattern as shown in FIG. 2, the width direction of the side beam 10 refers to a left-right direction as shown in FIG. 2. The mounting space 61 and the accommodating groove 1000 are right to the side beam 10. The second body 12 and the first body 11 are split workpieces, or it can be considered that the second body 12 and the first body 11 are separate members, the second body 12 and the first body 11 are not integrally formed members, the second body 12 and the first body 11 are separately processed and produced, and the second body 12 is fixed to the first body 11. That is to say, the second body 12 and the first body 11 are fixedly connected. The second body 12 and the first body 11 can be fixed by welding, the second body 12 and the first body 11 can be fixed by threaded connection, or the second body 12 and the first body 11 can be fixed by rivet connection and bonding. In the present disclosure, description is made by way of example in which the second body 12 and the first body 11 are connected by welding.

At least part of the structure of the second body 12 is located at a side of supporting portion 112 away from the accommodating groove 1000. When the side beam 10 is arranged in a pattern as shown in FIG. 2, the at least part of the structure of second body 12 is located at a lower side of the supporting portion 112. That is to say, the at least part of the structure of the second body 12 is located below the supporting portion 112, or it can be considered that the at least part of the structure of the second body 12 is located at a side of the supporting portion 112 away from the battery core 201. When the side beam 10 is arranged in a pattern as shown in FIG. 2, the at least part of the structure of the second body 12 is located below the supporting portion 112. When part of the structure of the second body 12 is located below the supporting portion 112, the other part of the structure of the second body 12 can be located below the main portion 111 and/or above the main portion 111 and/or at a side of the main portion 111. For example, part of the structure of the second body 12 is located below the supporting portion 112, and the other part of the structure of the second body 12 is located below the main portion 111.

The battery tray 100 may further include a tray bottom plate 20. The tray bottom plate 20 has a pressurized area 2011 configured to support the battery core 201. That is, a bottom wall of the accommodating groove 1000 has the pressurized area 2011. The pressurized area 2011 refers to an area where the orthographic projection of the tray bottom plate 20 overlaps with the orthographic projection of the battery core 201 in a height direction of the battery tray 100, when the battery core 201 is mounted on the tray bottom plate 20. Alternatively, it can be considered as a contact area between the battery core 201 and the tray bottom plate 20 when the battery core 201 is mounted on the tray bottom plate 20. The contact area includes an area where the battery core 201 is in direct contact or indirect contact with the tray bottom plate 20. For example, the battery core 201 is in indirect contact with the tray bottom plate 20 when there is an adhesive or a cooling structure between the battery core 201 and the tray bottom plate 20, and the battery core 201 is in direct contact with the tray bottom plate 20 when there is no an additional object between the battery core 201 and the tray bottom plate 20. Alternatively, it can be considered that an area where the weight of the battery core 201 directly acts on the tray bottom plate 20 is the pressurized area 2011. In the height direction of the battery tray 100, the orthogonal projection of a bottom wall of the accommodating groove 1000 is the orthogonal projection of the bottom wall of accommodating groove 1000 to a plane perpendicular to the height direction of the battery tray 100. In the height direction of the battery tray 100, the orthogonal projection of the battery core 201 is the projection of the battery core 201 in a plane perpendicular to the height direction of the battery tray 100.

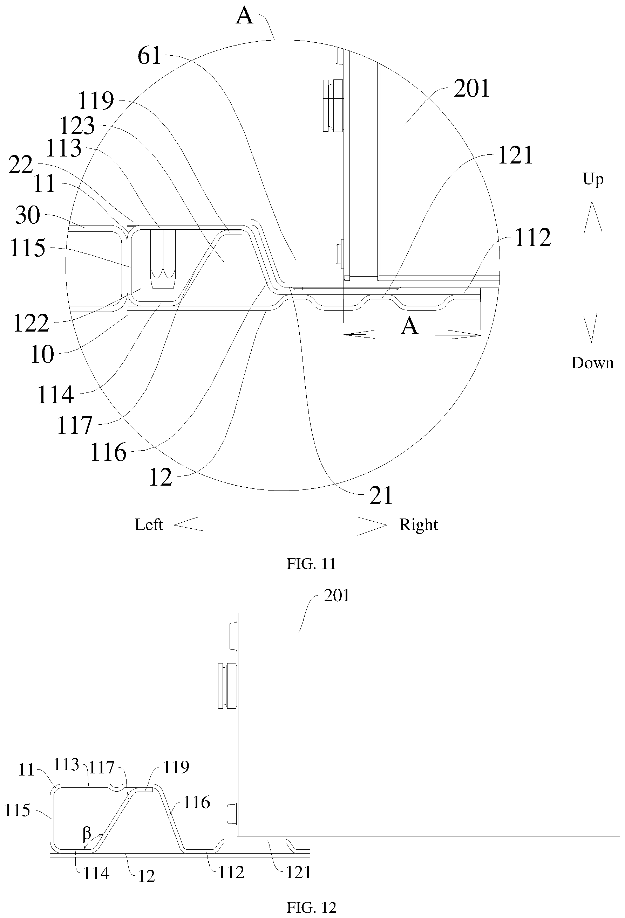

When the battery core 201 is mounted in the battery tray 100, the battery core 201 is located on the tray bottom plate 20 and in the pressurized area 2011 of the tray bottom plate 20. When the battery pack 200 is arranged in a pattern as shown in FIGs. 8 and 11, the tray bottom plate 20 is located above the supporting portion 112. In the height direction of the battery tray 100, that is, an up-down direction as shown in FIG. 11, the orthographic projection of the supporting portion 112 and the orthographic projection of the compressed area 2011 have an overlapping area, to allow the supporting portion 112 to support the battery core 201. The weight of the battery core 201 is loaded on the side beam 10. The side beam 10 bears most of the weight of the battery core 201, and the tray bottom plate 20 does not bear the weight of the battery core 201 or bears a small fraction of the weight of the battery core 201, greatly reducing the weight bearing requirement for the tray bottom plate 20 and reducing the thickness of the tray bottom plate 20. In some optional embodiments, the tray bottom plate 20 is configured as a nonmetallic member. In some optional embodiments, the tray bottom plate 20 is configured as an insulating member. Therefore, the tray bottom plate 20 can be made of materials with lower strength and small thickness. The tray bottom plate 20 may be formed of a lightweight nonmetallic composite material. For example, the lightweight nonmetallic composite material can be made of a resin and glass fiber, where the resin can be epoxy resin or polyurethane, and the present disclosure is not limited thereto. The lightweight nonmetallic composite material can also be a composite material that is made of other resins and glass fiber and has the same function. This reduces the weight of the tray bottom plate 20, facilitates the lightweight design of the battery tray 100 and the battery pack 200, and reduces the production cost of the side beam 10, the battery tray 100, and the battery pack 200.

By configuring the second body 12 and the first body 11 as split workpieces, the second body 12 and the first body 11 can be produced separately, and the thickness and material of the second body 12 and the first body 11 can be adjusted separately, so that the side beam 10 meets the design requirements of the strength and weight at different positions. Compared with an integrally rolled side beam 10 for which the thickness and material can only be adjusted as a whole, the side beam 10 of the present disclosure has reduced production cost. Moreover, for the integrally rolled side beam 10, a complicated cross section is difficult to be integrally rolled. In the present disclosure, by configuring the side beam 10 as a split structure, a side beam 10 having a complicated cross section can be formed.

Therefore, by providing the supporting portion 112, the side beam 10 bears most of the weight of the battery core 201, and the tray bottom plate 20 of the battery tray 100 bears a small fraction of the weight of the battery core 201, which reduce the strength requirement for the tray bottom plate 20, reduce the thickness of the tray bottom plate 20, and facilitate the lightweight design and the cost reduction of the battery pack 200. By configuring the second body 12 and the first body 11 as split workpieces, the second body 12 and the first body 11 can be produced separately, and the thickness and material of the second body 12 and the first body 11 can be adjusted separately, so that the side beam 10 meets the design requirements of the strength and weight at different positions.

In some embodiments of the present disclosure, in the width direction of the side beam 10, when the side beam 10 is arranged in a pattern as shown in FIG. 2, the width direction of the side beam 10 refers to the left-right direction as shown in FIG. 2. A length dimension of the supporting portion 112 for supporting the battery core 201 is A, and A meets the relation formula: 30 mm≤A≤100 mm. The orthographic projection of the supporting portion 112 and the orthographic projection of the pressurized area 2011 in the up-down direction as shown in FIG. 11 has an overlapping length of 30 mm to100 mm in the width direction of the side beam 10. Such an arrangement can ensure a supporting area of the supporting portion 112 to support the battery core 201, and ensure that the supporting portion 112 supports the battery core 201, and allows the supporting portion 112 to reliably support the battery core 201, to reduce the risk of vibration failure of the battery core 201, reduce the risk of vibration failure of the battery pack 200, and ensure the vibration safety of the battery pack 200.

In some embodiments of the present disclosure, as shown in FIGs. 2 and 7, the main portion 111 may include: a top plate 113, a bottom plate 114, a first side plate 115 and a second side plate 116. The top plate 113 and the bottom plate 114 are arranged at intervals in a height direction of the side beam 10. The first side plate 115 and the second side plate 116 are arranged at intervals in the width direction of the side beam 10. The first side plate 115 is connected between the top plate 113 and the bottom plate 114. As shown in FIG. 2, in the width direction of the side beam 10, the first side plate 115 and the second side plate 116 are arranged at intervals. The second side plate 116 is located at a side of the first side plate 115 close to the accommodating groove 1000 of the battery tray 100, and the second side plate 116 is connected between the supporting portion 112 and the top plate 113. In some optional embodiments, a lower end of the second side plate 116 is connected to the supporting portion 112, and an upper end of the second side plate 116 is connected to the top plate 113. The supporting portion 112 is connected to the second body 12 by welding. A structure strengthening plate 117 is connected between the top plate 113 and the bottom plate 114. The structure strengthening plate 117 is located between the first side plate 115 and the second side plate 116. As shown in FIGs. 2 and 7, a lower end of the first side plate 115 is connected with the bottom plate 114. The bottom plate 114 is connected to both the second body 12 and the structure strengthening plate 117. For example, the bottom plate 114 is connected to the second body 12 by welding. The structure strengthening plate 117 has a first connecting plate 119 at an upper end. The first connecting plate 119 is connected to the top plate 113, for example, the first connecting plate 119 is connected to the top plate 113 by welding. Through such an arrangement, the structural strength and rigidity of the side beam 10 are increased, the structural stability of the side beam 10 is improved, and the risk of deformation of the side beam 10 is reduced.

In the width direction of the side beam 10, the structure strengthening plate 117 is spaced apart from both the first side plate 115 and the second side plate 116. The structure strengthening plate 117, the bottom plate 114, the first side plate 115 and the top plate 113 jointly define a first cavity 122. The structure strengthening plate 117, the second body 12, the second side plate 116 and the top plate 113 jointly define a second cavity 123. The first cavity 122 and the second cavity 123 are arranged in the width direction of the side beam 10. When the first cavity 122 is impacted, the first cavity 122 can absorb the impact force, which reduces the impact force transmitted to the inside of the battery pack 200, and reduces the risk of damage of the battery core 201 in the battery pack 200, thereby improving the safety of the battery pack 200 during use.

In some embodiments, the height direction of the side beam 10 is consistent with the height direction of the battery tray 100, and the width direction of the side beam 10 is consistent with the width direction or length direction of the battery tray 100. When the battery tray 100 is mounted to a vehicle 2000, the height direction of the side beam 10 may be consistent with the height direction of the vehicle 2000, and the width direction of the side beam 10 may be consistent with the length or the width direction of the vehicle.

In some embodiments of the present disclosure, the main portion 111 is provided with a rivet nut 120. Particularly, the rivet nut 120 is provided on the top plate 113. The rivet nut 120 extends into the first cavity 122, and the side beam 10 and a cover 202 of the battery pack 200 are assembled by fitting a bolt to the rivet nut 120.

In some embodiments of the present disclosure, as shown in FIGs. 2 and 7, the structure strengthening plate 117 is obliquely connected between the top plate 113 and the bottom plate 114, and the structure strengthening plate 117 is obliquely supported between the top plate 113 and the bottom plate 114, whereby the structural strength and rigidity of the side beam 10 are further increased, the structural stability of the side beam 10 is improved, and the risk of deformation of the side beam 10 is further reduced, to extend the service life of the side beam 10 and the battery tray 100.

In some optional embodiments, when the side beam 10 is arranged in a pattern as shown in FIG. 2, in a direction from an upper end to a lower end of the side beam 10, the structure strengthening plate 117 is arranged to tilt away from the accommodating groove 1000, or it can be considered that the structure strengthening plate 117 is arranged to tilt away from the second side plate 116, or it can be considered that the structure strengthening plate 117 is arranged to tilt away from the mounting space 61 of the battery tray 100. Alternatively, it can be considered that in an up-down direction of the battery tray 100, the structure strengthening plate 117 is arranged to extend obliquely away from the mounting space 61. Through such an arrangement, the structural strength and rigidity of the side beam 10 are further increased, and the stability of the side beam 10 is further improved, thereby further improving the capability of the side beam 10 to support the battery core 201, and further reducing the risk of deformation of the side beam 10.

In some optional embodiments, as shown in FIG. 12, the angle between the structure strengthening plate 117 and the bottom plate 114 is β, and β meets the relation formula: 110°≤β≤140°. For example, β is 120°. Through such an arrangement, the structural stability of the side beam 10 is further increased, and the risk of deformation of the side beam 10 is further reduced, thereby further extending the service life of the side beam 10 and the battery tray 100.

In some embodiments of the present disclosure, as shown in FIGs. 2 and 7, in the direction from the upper end to the lower end of the side beam 10, the second side plate 116 is arranged to tilt toward the accommodating groove 1000. In other words, the structure strengthening plate 116 is arranged to tilt away from the first side plate 115. Through such an arrangement, the structural strength of the side beam 10 is further increased, and the stability of the side beam 10 is further improved, thereby further improving the capability of the side beam 10 to support the battery core 201, and further reducing the risk of deformation of the side frame 20.

In some embodiments of the present disclosure, as shown in FIGs. 2 and 7, the angle between the second side plate 116 and the structure strengthening plate 117 is α, and α meets the relation formula: 50°≤α≤70°. For example, α is 60°. Through such an arrangement, the structural stability of the side beam 10 is further increased, and the risk of deformation of the side beam 10 is further reduced, thereby further extending the service life of the side beam 10 and the battery tray 100.

In some embodiments of the present disclosure, the cross-sectional shape of the first cavity 122 and the cross-sectional shape of the second cavity 123 are both triangular or trapezoidal. Through such an arrangement, the structural stability of the side beam 10 is increased, and the risk of deformation of the side beam 10 is further reduced.

According to a specific embodiment of the present disclosure, the cross-sectional shape of the second cavity 123 is triangular. That is, the shape of a cross section of the second cavity 123 that is perpendicular to a length direction of the side beam 10 is triangular, further, isosceles triangle or equilateral triangle. The second body 12 serves as a bottom wall of the triangle. Through such an arrangement, the structural stability of the side beam 10 is further increased, and the risk of deformation of the side beam 10 is further reduced.

In some optional embodiments, the angle between the second body 12 and the structure strengthening plate 117 serves as a base angle of the triangle. The base angle is β1 that meets the relation formula: 50°≤β1≤70°. For example, β1 is 60°. Through such an arrangement, the structural stability of the side beam 10 is further increased, and the risk of deformation of the side beam 10 is further reduced, thereby further extending the service life of the side beam 10 and the battery tray 100.

In some optional embodiments, the vertex angle of the triangle is α that meets the relation formula: 50°≤α≤70°. For example, α is 60°. In this way, the cross-sectional shape of the second cavity 123 is arranged to be an equilateral triangle. Through such an arrangement, the structural stability of the side beam 10 is further increased, and the risk of deformation of the side beam 10 is further reduced, thereby further extending the service life of the side beam 10 and the battery tray 100.

According to another specific embodiment of the present disclosure, as shown in FIG. 2, the cross-sectional shape of the second cavity 123 is arranged to be a trapezoid. That is, the shape of a cross section of the second cavity 123 that is perpendicular to the length direction of the side beam 10 is trapezoidal. Further, the second body 12 serves as a bottom wall of the trapezoid, and the angle between the second body 12 and the structure strengthening plate 117 serves as a base angle of the trapezoidal shape of the second cavity 123. The base angle is β1 that meets the relation formula: 50°≤β1≤70°. For example, β1 is 60°. Through such an arrangement, the structural stability of the side beam 10 is further increased, and the risk of deformation of the side beam 10 is further reduced, thereby further extending the service life of the side beam 10 and the battery tray 100.

Further, as shown in FIG. 2, the angle between the two waists of the trapezoidal shape of the second cavity 123 is α, that is, the angle between the second side plate 116 and the structure strengthening plate 117, and α meets the relation formula: 50°≤α≤70°. For example, α is 60°. Through such an arrangement, the structural stability of the side beam 10 is further increased, and the risk of deformation of the side beam 10 is further reduced, thereby further extending the service life of the side beam 10 and the battery tray 100.

In some embodiments of the present disclosure, as shown in FIGs. 2 and 7, the cross-sectional shape of the first cavity 122 is trapezoidal. That is, the shape of a cross section of the first cavity 122 that is perpendicular to the length direction of the side beam 10 is trapezoidal. The bottom plate 114 serves as a top wall of the trapezoidal shape of the first cavity 122, and the top plate 113 serves as a bottom wall of the trapezoidal shape of the first cavity 122. Through such an arrangement, the structural stability of the side beam 10 is further increased, and the risk of deformation of the side beam 10 is further reduced, thereby further extending the service life of the side beam 10 and the battery tray 100.

In some embodiments of the present disclosure, as shown in FIGs. 2 and 7, in a height direction of the side beam 10, where the height direction of the side beam 10 refers to an up-down direction as shown in FIG. 2, a height difference between a lower surface of the bottom plate 114 and a lower surface of the supporting portion 112 is H, and H meets the relation formula: 5 mm≤H≤10 mm. For example, H is 8 mm. As shown in FIG. 2, the tray bottom plate 20 is provided on an upper surface of the supporting portion 112, and the supporting portion 112 supports the tray bottom plate 20. A thermal insulation layer is provided to a lower surface of the tray bottom plate 20. The thermal insulation layer serves for heat preservation of the battery pack 200. The thermal insulation layer is located between two opposite side beams 10. By setting the height difference between the lower surface of the bottom plate 114 and the lower surface of the supporting portion 112 to be H, a space in which the thermal insulation layer is provided can be formed below the tray bottom plate 20. Accordingly, the insulation layer is ensured to have an appropriate thickness, so as to well thermally insulate the battery pack 200, and a lower surface of the thermal insulation layer is avoided to protruding out of the battery tray 100, so that the bottom of the battery tray 100 becomes more flat.

In some embodiments of the present disclosure, at least part of the structure of the second body 12 is located below the supporting portion 112. A structure of the second body 12 located below the supporting portion 112 is connected to the main portion 111 and/or the supporting portion 112. Further, as shown in FIGs. 2 and 7, when the side beam 10 is arranged in a pattern as shown in FIG. 2, the whole structure of the second body 12 is located below the first body 11, part of the structure of the second body 12 is located below the supporting portion 112, and the other part of the structure of the second body 12 is located below the main portion 111. The second body 12 located below the main portion 111 is connected to the bottom plate 114 by welding, and the second body 12 located below the supporting portion 112 is connected to the supporting portion 112 by welding. The second body 12 has a structuring strengthening performance. Through such an arrangement, the structural strength and rigidity of the side beam 10 are further increased, and the risk of deformation of the side beam 10 is reduced.

In some embodiments of the present disclosure, as shown in FIGs. 2 and 7, at least part of the structure of the second body 12 is located below the supporting portion 112. The structure of the second body 12 located below the supporting portion 112 is provided with a boss 121 protruding toward the first body 11, and the boss 121 is fixedly connected to the supporting portion 112. Further, when the side beam 10 is arranged in a pattern as shown in FIG. 2, in an up-down direction of the side beam 10, the boss 121 is arranged corresponding to the supporting portion 112, and the boss 121 is connected to the supporting portion 112 by welding. Through such an arrangement, the structural strength of the side beam 10 is further increased, and the stability of the side beam 10 is further improved, to avoid the deformation of the supporting portion 112, and allow the supporting portion 112 to reliably support the battery core 201.

As shown in FIG. 2, in a side beam 10 according to a first embodiment of the present disclosure, the second body 12 protrudes toward the supporting portion 112 to form the boss 121. The second body 12 can be formed by rolling. The structure of the second body 12 located below the supporting portion 112 is provided with multiple bosses 121, the multiple bosses 121 are arranged in the width direction of the side beam 10 in sequence, and at least one boss 121 of the multiple bosses 121 is located below the pressurized area 2011. Such an arrangement enables the boss 121 to support the battery core 201, thereby further improving the weight bearing capacity of the side beam 10 and reducing the risk of deformation of the supporting portion 112.

As shown in FIG. 7, in a side beam 10 according to a second embodiment of the present disclosure, a protruding structure is provided at a surface of the second body 12 close to the supporting portion 112 to form the boss 121. Further, the boss 121 is internally provided with a weight reducing cavity 124. The second body 12 can be formed by extruding, and the boss 121 is located below the supporting portion 112. Such an arrangement enables the boss 121 to support the battery core 201, and the supporting portion 112 can further improve the weight bearing capacity of the side beam 10 and further reduce the risk of deformation of the supporting portion 112.

In some embodiments of the present disclosure, as shown in FIG. 12, the second body 12 configured as a flat plate structure. Through such an arrangement, the structure of the second body 12 is simplified, the manufacturing of the second body 12 is promoted, the production efficiency of the second body 12 is improved, and the first body 11 is facilitated to be formed by rolling.

Further, as shown in FIG. 12, the second body 12 is fixedly connected to the supporting portion 112. The supporting portion 112 is provided with the boss 121 configured to support the battery core 201. In the height direction of the battery tray 100, the orthographic projection of the boss 121 and the orthographic projection of the battery core 201 have an overlapping area. The boss 121 is located below and support the battery core 201, and the boss 121 can support the battery core 201. By providing the boss 121 on the supporting portion 112, the structural strength of the side beam 10 is increased, and the risk of deformation and cracking of the supporting portion 112 are avoided, to extend the service life of the side beam 10 and allow the side beam 10 to reliably support the battery core 201. In the height direction of the battery tray 100, by arranging the orthographic projection of the boss 121 and the orthographic projection of the battery core 201 to have an overlapping area, the boss 121 can support the battery core 201, and the strength of supporting battery core 201 is increased, whereby the battery core 201 is reliably supported, and the side beam 10 meets the requirement of supporting the battery core 201.

In some embodiments of the present disclosure, as shown in FIGs. 2, and 5 to 7, the side beam 10 is connected with a lifting lug structure 30, and the side beam 10 and the lifting lug structure 30 can be connected by welding. The lifting lug structure 30 is provided with a mounting hole 31, and the lifting lug structure 30 is mounted on the vehicle 2000 by a fastener (such as a bolt), so as to achieve the purpose of mounting the battery pack 200 on the vehicle 2000.

It is to be understood that the side beam 10 according to the first embodiment and the side beam 10 according to the second embodiment differ in that the specific structures of the boss 121 are different, and the specific structures of the lifting lug structure 30 are different.

In some embodiments of the present disclosure, as shown in FIGs. 2 and 7, when the side beam 10 is arranged in a pattern as shown in FIG. 2, in the height direction of the side beam 10, the height of the supporting portion 112 is lower than the height of an upper surface of the main portion 111. After the tray bottom plate 20 is mounted in the mounting space 61, by arranging the height of the supporting portion 112 to be lower than the height of the upper surface of the main portion 111, the supporting portion 112 is ensured to be located below and support the tray bottom plate 20, the tray bottom plate 20 is ensured to be mounted in the mounting space 61, and the supporting portion 112 is ensured to support the tray bottom plate 20 and the battery core 201.

In some embodiments of the present disclosure, as shown in FIGs. 2 and 7, the main portion 111 and the supporting portion 112 are configured as an integrally formed component. Through such an arrangement, the first body 11 can be configured as an integrally formed component, and the structural strength and rigidity of the first body 11 are increased, to further improve the weight bearing capacity of the side beam 10.

In some embodiments of the present disclosure, the first body 11 and the second body 12 are connected by welding through at least one row of solder joint set. Each row of solder joint set includes multiple solder joints, and the distance between any two adjacent solder joints in each row of solder joint set is D that meets the relation formula: 40 mm≤D≤60 mm. The first body 11 and the second body 12 are connected by laser welding. Too dense solder joints will lead to the deformation of the first body 11 and the second body 12, and too few solder joints will lead to insufficient assembly strength of the first body 11 and the second body 12. By keeping the distance between any two adjacent solder joints in each row of solder joint set between 40 mm and 60 mm, the deformation of the first body 11 and the second body 12 can be avoided, and the assembly strength between the first body 11 and the second body 12 can also be ensured, to avoid the separation of the first body 11 from the second body 12.

In some embodiments of the present disclosure, the first body 11 and the second body 12 can be made of an aluminum material, or the first body 11 and the second body 12 can also be made of a steel material, which is not limited in the present disclosure. The first body 11 and the second body 12 can also be made of other metal materials that have the same function as steel. For example, the first body 11 and the second body 12 are both made of a steel material. The first body 11 and the second body 12 can be rolled with the steel material, or the first body 11 and the second body 12 can also be extruded with the steel material. By configuring the first body 11 and the second body 12 as a metal member, the weight bearing capacity of the side beam 10 is improved and the risk of deformation of the side beam 10 is reduced. The first body 11 and the second body 12 made of a steel material can withstand a high temperature of 1500°C or more, which ensures the integrity of the side beam 10 upon thermal runaway of the battery core 201.

As shown in FIGs. 1 to 11, the battery tray 100 according to the embodiment of the present disclosure includes: a side beam 10 and a tray bottom plate 20. The side beam 10 is a side beam 10 according to the above embodiment, and the tray bottom plate 20 is a tray bottom plate 20 according to the above embodiment. Particularly, the battery tray 100 includes a side frame 60, and the side frame 60 defines a mounting space 61. The side frame 60 includes a side beam 10, and the tray bottom plate 20 is mounted in the mounting space 61. The tray bottom plate 20 has a pressurized area 2011 configured to support the battery core 201. The supporting portion 112 is located below and support the tray bottom plate 20. In the height direction of the battery tray 100, the orthographic projection of the supporting portion 112 and the orthographic projection of the compressed area 2011 have an overlapping area, to allow the supporting portion 112 to support the battery core 201. The weight of the battery core 201 is loaded on the side beam 10. The side beam 10 bears most of the weight of the battery core 201, and the tray bottom plate 20 bears a small fraction of the weight of the battery core 201, greatly reducing the weight bearing requirement for the tray bottom plate 20. Therefore, the tray bottom plate 20 can be made of materials with lower strength and small thickness. This reduces the weight of the tray bottom plate 20, facilitates the lightweight design of the battery tray 100 and the battery pack 200, and reduces the production cost of the side beam 10, the battery tray 100, and the battery pack 200. It can be understood that when the battery tray 100 is mounted on a vehicle 2000, the width direction of the battery tray 100 may be consistent with the width direction of the vehicle, and the length direction of the battery tray 100 can be consistent with the length direction of the vehicle. It is clear that the width direction of the battery tray 100 may be consistent with the length direction of the vehicle and the length direction of the battery tray 100 may be consistent with the width direction of the vehicle.

As shown in FIGs. 1 to 11, the battery pack 200 according to the embodiment of the present disclosure includes a battery core 201, a battery tray 100 and a cover 202. The battery tray 100 is a battery tray 100 according to the above embodiment. The cover 202 and the battery tray 100 jointly define an accommodating cavity for accommodating the battery core 201, and the cover 202 is connected to the battery tray 100. The cover 202, the side frame 60 and the tray bottom plate 20 jointly define an accommodating cavity for accommodating the battery core 201. When the battery tray 100 is arranged in a pattern as shown in FIG. 2, the cover 202 covers the accommodating groove 1000 of the battery tray 100 to form the accommodating cavity. The battery core 201 is accommodated in the accommodating cavity. The cover 202 is mounted to the side frame 60 by fitting a bolt to the rivet nut 120. Further, a seal (such as a sealing ring) is sandwiched at a joint between the cover 202 and the side frame 60. The gap between the cover 202 and the side frame 60 is sealed by the seal, to seal the accommodating cavity, and ensure the leak tightness of the battery tray 200.

In some embodiments of the present disclosure, the battery pack 200 further includes: a press plate. The press plate is configured as a closed ring structure. The cover 202 and the seal are sandwiched between the press plate and the side frame 60. A bolt extends through the press plate, the cover 202 and the seal and is connected to the rivet nut 120, to assemble the press plate, the cover 202, the seal and the side frame 60 together. The press plate allows the whole seal to be uniformly pressed, and ensures the reliable sealing of the accommodating cavity.

As shown in FIG. 11, the tray bottom plate 20 includes a bottom plate body 21 and an extension portion 22. The bottom plate body 21 defines an accommodating groove 1000 for accommodating the battery core 201 or a battery module. In the present disclosure, description is made by way of example in which the accommodating groove 1000 accommodates the battery core 201. A bottom wall of the bottom plate body 21 has a pressurized area 2011 configured to support the battery core 201. The extension portion 22 is arranged to extend along a peripheral edge of the bottom plate body 21. Further, the extension portion 22 is configured as a circular structure. Particularly, the extension portion 22 is configured as a closed ring structure. The bottom plate body 21 is mounted in the mounting space 61, and the extension portion 22 is located outside the mounting space 61. In the height direction of the battery tray 100, the extension portion 22 is located above the side frame 60 and arranged on the side frame 60.

The cover 202 is covered at an open end of the accommodating groove 1000 to define the accommodating cavity. The extension portion 22 is sandwiched between the cover 202 and the side frame 60. The bolt extends through the cover body 202. The cover 202, the tray bottom plate 20 and the side frame 60 are assembled together by the extension portion 12 and the side frame 20. Further, a seal (such as a sealing ring) is sandwiched between the extension portion 22 and the cover 202, and the seal can seal the accommodating cavity. The cover 202 and the tray bottom plate 20 define a sealed insulating cavity (i.e. the accommodating cavity). After the battery core 201 is placed in the accommodating cavity, the battery core 201 can be completely isolated from the side frame 60, so that the battery core 201 is in a completely insulated environment, and the battery pack 200 has no risk of electric leakage.

In some embodiments of the present disclosure, as shown in FIG. 8, the battery pack 200 further includes: a press plate 203. The press plate 203 is configured as a closed ring structure. The cover 202, the seal and the extension portion 22 are sandwiched between the press plate 203 and the side frame 60. A bolt extends through the press plate 203, the cover 202, the extension portion 22 and the side frame 60 to assemble the press plate 203, the cover 202, the tray bottom plate 20 and the side frame 60 together. The press plate 203 allows the whole seal to be uniformly pressed, and ensures the reliable sealing of the accommodating cavity.

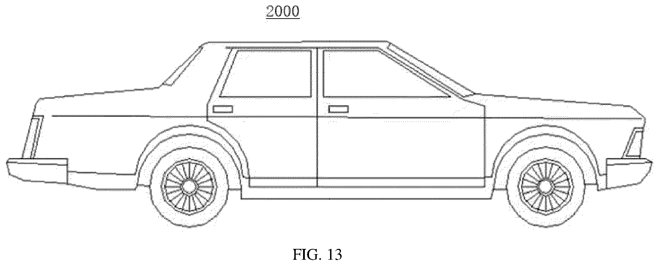

As shown in FIG. 13, the vehicle 2000 according to the embodiment of the present disclosure includes a battery pack 200 according to above embodiment. The battery pack 200 is mounted on the vehicle 2000 to provide electric energy for the vehicle 2000. The side beam 10 bears most of the weight of the battery core 201, and the tray bottom plate 20 of the battery tray 100 bears a small fraction of the weight of the battery core 201, which reduce the strength requirement for the tray bottom plate 20, reduce the thickness of the tray bottom plate 20, facilitate the lightweight design and the cost reduction of the battery pack 200, thereby facilitating the lightweight design and the cost reduction of the vehicle 2000. By configuring the second body 12 and the first body 11 as split workpieces, the second body 12 and the first body 11 can be produced separately, and the thickness and material of the second body 12 and the first body 11 can be adjusted separately, so that the side beam 10 meets the design requirements of the strength and weight at different positions.

In the description of the specification, the description with reference to the terms "an embodiment", "some embodiments", "exemplary embodiments", "example", "specific example", or "some examples" and so on means that specific features, structures, materials or characteristics described in connection with the embodiment or example are embraced in at least one embodiment or example of the present disclosure. In the specification, exemplary descriptions of the foregoing terms do not necessarily refer to the same embodiment or example. In addition, the described specific features, structures, materials, or characteristics may be combined in a proper manner in any one or more of the embodiments or examples.

Although the embodiments of the present disclosure have been shown and described, a person of ordinary skill in the art should understand that various changes, modifications, replacements and variations can be made to the embodiments without departing from the principles and spirit of the present disclosure, and the scope of the present disclosure is as defined by the appended claims and their equivalents.

## Claims

1. A side beam (10) for a battery tray (100), the battery tray (100) having an accommodating groove (1000) for accommodating a battery core (201), comprising:
a first body (11), the first body (11) comprising a main portion (111) and a supporting portion (112), the supporting portion (112) being connected to the main portion (111) and provided at an end of the main portion (111) close to the accommodating groove (1000), and the supporting portion (112) being configured to support the battery core (201);
a second body (12), the second body (12) and the first body (11) being split workpieces, the second body (12) being fixed to the first body (11), and at least part of a structure of the second body (12) being located at a side of the supporting portion(112) away from the accommodating groove (1000).

2. The side beam (10) for the battery tray (100) according to claim 1, wherein in a width direction of the side beam (10), a length dimension of the supporting portion (112) for supporting the battery core (201) is A, and A meets a relation formula: 30 mm≤A≤100 mm.

3. The side beam (10) for the battery tray (100) according to claim 1 or 2, wherein the main portion (111) comprises: a top plate (113), a bottom plate (114), a first side plate (115) and a second side plate (116), the top plate (113) and the bottom plate (114) being arranged at intervals in a height direction of the side beam (10), the first side plate (115) and the second side plate (116) being arranged at intervals in the width direction of the side beam (10), the first side plate (115) being connected between the top plate (113) and the bottom plate (114), the second side plate (116) being connected between the supporting portion (112) and the top plate (113), and a structure strengthening plate (117) being connected between the top plate (113) and the bottom plate (114).

4. The side beam (10) for the battery tray (100) according to claim 3, wherein the structure strengthening plate (117) is obliquely connected between the top plate (113) and the bottom plate (114).

5. The side beam (10) for the battery tray (100) according to claim 4, wherein in a direction from an upper end to a lower end of the side beam (10), the structure strengthening plate (117) is arranged to tilt away from the accommodating groove (1000).

6. The side beam (10) for the battery tray (100) according to claim 4 or 5, wherein an angle between the structure strengthening plate (117) and the bottom plate (114) is β, and β meets a relation formula: 110°≤β≤140°.

7. The side beam (10) for the battery tray (100) according to any one of claims 3 to 6, wherein in the direction from the upper end to the lower end of the side beam (10), the second side plate (116) is arranged to tilt toward the accommodating groove (1000).

8. The side beam (10) for the battery tray (100) according to any one of claims 3 to 7, wherein an angle between the second side plate (116) and the structure strengthening plate (117) is α, and α meets a relation formula: 50°≤α≤70°.

9. The side beam (10) for the battery tray (100) according to any one of claims 3 to 8, wherein in the height direction of the side beam (10), a height difference between a lower surface of the bottom plate (114) and a lower surface of the supporting portion (112) is H, and H meets a relation formula: 5 mm≤H≤10 mm.

10. The side beam (10) for the battery tray (100) according to any one of claims 1 to 9, wherein at least part of the structure of the second body (12) is located below the supporting portion (112), the structure of the second body (12) located below the supporting portion (112) being provided with a boss (121) protruding toward the first body (11), and the boss (121) being fixedly connected to the supporting portion (112).

11. The side beam (10) for the battery tray (100) according to any one of claims 1 to 9, wherein the second body (12) is configured as a flat plate structure, the second body (12) being fixedly connected to the supporting portion (112), and the supporting portion (112) being provided with a boss (121) configured to support the battery core (201).

12. The side beam (10) for the battery tray (100) according to any one of claims 1 to 11, wherein the main portion (111) and the supporting portion (112) are configured as an integrally formed component.

13. A battery tray (100), comprising:
a side beam (10), the side beam (10) being the side beam (10) for the battery tray (100) according to any one of claims 1 to 12; and
a tray bottom plate (20), the tray bottom plate (20) having a pressurized area (2011) configured to support a battery core (201), the supporting portion (112) providing support below the tray bottom plate (20), and in a height direction of the battery tray (100), an orthographic projection of the supporting portion (112) and an orthographic projection of the pressurized area (2011) having an overlapping area.

14. A battery pack (200), comprising:
a battery core (201);
a battery tray (100), the battery tray (100) being the battery tray (100) according to claim 13; and
a cover (202), the cover (202) and the battery tray (100) jointly defining an accommodating cavity for accommodating the battery core (201), and the cover (202) being connected to the battery tray (100).

15. A vehicle (2000), comprising the battery pack (200) according to claim 14.
